# EUROPEAN PATENT SPECIFICATION

(11) **EP 1 008 622 B1**
(45) Date of publication and mention of the grant of the patent: **08.02.2006**
(21) Application number: 99309477.0
(22) Date of filing: 26.11.1999
(51) Int. Cl.: C08K 5/01, C08L 27/06

(54) **Impact modifier compositions which enhance the impact strength properties and lower the viscosity of melt processed plastics resins, and methods of making said compositions**
Schlagzähmodifizierzusammensetzung mit verbesserter Schlagzähigkeit und niedriger Schmelzviskosität von schmelzverarbeiteten Kunstoffen und deren Herstellungsverfahren
Compositions de modificateur de résistance au choc avec résistance au choc améliorée et viscosité à l'état fondu réduite de résines de plastique moulées et leurs méthodes de préparation

(30) Priority: 08.12.1998 US 111361 P
(43) Date of publication of application: 14.06.2000
(73) Proprietor: ROHM AND HAAS COMPANY, Philadelphia, Pennsylvania 19106-2399 (US)
(72) Inventor: Hamilton, Raymond Gerard, Washington Crossing, Pennsylvania 18977 (US); Cruz, Carlos Alfonso, Holland, Pennsylvania 18966 (US); Chou, Chuen-Shyong, Ambler, Pennsylvania 19002 (US); Liwak, Susan Marie, Langhorne, Pennsylvania 19047 (US)
(74) Representative: Kent, Venetia Katherine

(56) References cited:
- FR-A- 2 040 024
- US-A- 4 379 876
- US-A- 4 456 733

## Description

The present invention relates to impact modifier compositions which enhance the impact strength performance properties and also lower the viscosity of melt processed plastics resins. In particular, the impact modifier compositions of the present invention improve the impact and viscosity properties of polyvinyl halide resin compounds such as polyvinyl chloride. The invention also provides methods of making these impact modifier compositions.

Plastics resins are used in numerous applications, for example, in plastics sheet, and in blow and extrusion moulded articles such as bottles and containers and building materials. However, articles moulded from resins often suffer from performance problems due to their rigid nature which causes the moulded articles to break or crack easily. To counteract these difficulties it is well known to mix the plastics resins with additive materials, for example, impact strength modifiers to improve the impact strength properties of the moulded articles.

Another important property which markedly influences the efficiency of moulding plastics resins is the viscosity of the resin at the moulding or processing temperature (hereafter 'melt viscosity'). To ensure that the extrusion and blow moulding pressures are low so as to maximise the efficiency of the extrusion/moulding equipment, it is highly advantageous for the melt viscosity to be kept to a minimum, whilst at the same time ensuring that the shape of the moulded article is retained and that no sagging occurs.

Although impact modifiers improve impact strength, there is a further problem in that they cause the flowability of the resin to decrease, i.e., the melt viscosity of the resin increases. This problem is noted by R.D. Deanin *et al* in Polym. Material Sci. Eng. 75, 502, 1995. This journal article teaches that the viscosity problem can be overcome by the addition of small amounts, about 5 parts per hundred parts of resin, of solid plasticizers such as dicyclohexyl phthalate. However, although such plasticizers do reduce resin melt viscosity, they do so at the expense of increasing embrittlement or decreasing the impact strength of plastics resins.

There are also several patents which disclose the enhancement of impact strength performance of plastics resins using conventional impact modifiers in combination with various other additives. For example, US Patent Number 5,780,549 discloses that the impact resistance of PVC compounds is improved by first forming a modified impact modifier by allowing polybutene polymer to absorb into a conventional impact modifier and then adding this modified impact modifier to PVC and processing in the usual manner. US Patent Number 5,360,853 discloses blending together PVC, an impact modifier and polysiloxane to obtain a PVC resin with enhanced impact strength resistance as compared to PVC resin with the impact modifier alone. Similarly, US Patent Number 3,428,707 teaches increasing the impact strength of a PVC/impact modifier composition by preparing a blend ofPVC and an impact modifier and then milling this blend with polysiloxane. Although these prior art documents disclose that impact strength is improved by the addition of polybutene and polysiloxane, these materials are expensive and this reduces the cost effectiveness of the plastics resin.

FR-A-2040024 discloses a toughened polymeric vinyl-aromatic composition prepared by polymerising vinyl-aromatic monomer in the presence of a mineral oil and an elastomer.

US-A-4379876 discloses MBS polymer impact polymers modified with vegetable oil.

US-A-4456733 discloses the use of mineral oil and impact modifiers for modifying a resin.

Canadian Patent Application No. 2,102,478 discloses that the impact strength of polyvinyl chloride resin may be improved by mixing it with an impact modifier and a lubricant system; the latter comprises a long chain carboxylic acid, a metal salt of a carboxylic acid and mineral oil. However, either the process used to combine the PVC and the other components in the reaction system together, or the choice of reaction components, or both, does not appear to give either a consistently large decrease in the viscosity or a consistently large increase in the impact strength of the melt processed PVC.

A journal article published by D.M. Detweiler *et al* in Society of Plastics Engineers Annual Technical Conference: Paper V 19, 647, (1973), discloses a study of the interaction of impact modifiers and lubricants. The experiments were conducted by mixing together a polyvinyl chloride resin, an impact modifier, a stabiliser and a lubricant. The results show that the addition of the lubricants can improve the performance of the MBS impact modifier but they apparently have very little effect on the melt viscosity of the PVC resin.

Finally, an article published in Polymer Science U.S.S.R Vol. 22, No. 10 pp 2395-2402, 1980 by T.B. Zavarova *et al* teaches that the impact strength of a PVC plastic resin containing a methyl methacrylate/butadienelstyrene (MBS) impact modifier can be increased by the addition of a lubricant such as butyl stearate, glycerin monoricinoleate, transformer oil or α-hydroxyisobutyric acid. However, this prior art teaches, in particular, that the presence of the butyl stearate has no effect on the melt viscosity of PVC-MBS compositions.

The aim of the present invention, therefore, is to provide an impact modifier composition which enhances the impact strength properties of melt processed plastics resins and which also has a lowering effect on the melt viscosity of such plastics resins.
The present invention, in its various aspects, is as set out in the accompanying claims.

Accordingly, in a first embodiment, the present invention provides a method of producing an impact modifier composition, said method comprising mixing together ingredients consisting of:-
a) at least one impact modifier;
b) at least one mineral oil; and
c) 0-50% by weight of the composition of one or more plastics resins; and, optionally
d) additives selected from stabilizers, internal lubricants, pigments and processing aids; wherein the ratio of mineral oil to impact modifier is in the range from 0.1:10 to 4:10.

The at least one impact modifier can be used (i) in latex or emulsion form, in which case the resulting impact modifier composition may be isolated by coagulation or spray drying; or (ii) in dry powder form.

In another aspect, the present invention provides a method of producing an impact modifier composition, said method comprising mixing together:-
a) at least one impact modifier in latex form;
b) at least one mineral oil; and
c) 0-50% by weight of the one or more plastics resins;

wherein the ratio of mineral oil to impact modifier is in the range from 0.1:10 to 4:10.

Impact modifier compositions prepared as above improve the impact strength and lower the viscosity of melt processed plastics resins.

Impact modified plastics resins may be prepared by combining one or more plastics resins with the impact modifier composition described above.

Preferably, the amount of impact modifier added to the plastics resin is from 0.1 to 20 parts per hundred parts of resin (PHR).

In all of the above embodiments, suitable plastics resins include polyvinyl halide resins, such as polyvinyl chloride; polyalkylene terephthalate polymers; such as polyethylene terephthalate and polybutyleneterephthalate polymers; polycarbonate polymers; polyalkylene terephthalate/polycarbonate polymer blends; acrylonitrile/butadiene/styrene polymers; polyolefin polymers, such as polyethylene, polypropylene; mixed polyolefin polymer blends such as polymer blends of polyethylene and polypropylene polymers; and polyketone polymers.
The term "plastics resin" is to be interpreted to include mixtures or blends of one or more of these polymers. The term 'polymer' is to be interpreted to include all types of polymer molecules characterized as having repeating units of atoms or molecules linked to each other such as homopolymers co-polymers including block, random, and alternating co-polymers, grafted polymers, and co-polymers terpolymers, etc.

Also, in all of the above embodiments, the weight ratio (hereafter "ratio") of mineral oil to impact modifier is from 0.1:10 to 4:10. Preferably, the ratio is 1.5:10. The actual ratio used will depend upon the relative solubility of the mineral oil in the particular plastics resin and the impact modifier. However, when the ratio is too large, for example 5:1, problems of over lubrication are encountered which makes milling difficult.

The mineral oils useful in the invention are preferably paraffinic oils with saturated straight or branched chains or rings containing at least 20 carbon atoms; naphthenic or relatively naphthenic, that is, containing saturated monocyclic (from 4 to 12 carbon atoms) or polycyclic (from 13 to 26 carbon atoms) hydrocarbon oils; microcrystalline wax, paraffin wax and low molecular weight polyolefins such as polyethylene wax, either in liquid, powder or flake form; aromatic oils with a minimum molecular weight of 300; also suitable are mineral oils known as white mineral oils which are a complex mixture of saturated paraffinic and naphthenic hydrocarbons and are free of aromatic compounds, sulphur containing compounds, acids and other impurities. Preferred mineral oils are those which are easy to handle and do not present environmental and/or health concerns, such as those which have a low viscosity and those with a low volatility at the temperatures used during the milling and extrusion blending processes. Particular preferred mineral oils include the heavy mineral oil such as those termed USP mineral oils which typically have a density of from 0.860-0.89 g/m and light mineral oils which typically have a density of from 0.80-0.87g/m. The preferred heavy mineral has a density of 0.862g/ml and the preferred light mineral oil has a density of 0.838g/ml, both of these oils are available from the Aldrich Chemical Company.

Any impact modifier is contemplated for use in the present invention, especially preferred include graft copolymers comprising a rubbery polymeric core and one or more rigid shells. Examples of suitable impact modifiers include methyl methacrylate/butadiene/styrene based resins (MBS), acrylic based impact modifiers (AIMS), acrylonitrile/butadiene/styrene based graft copolymers (ABS), ethylene/vinyl acetate based graft copolymer (EVA), methylmethacrylate/acrylonitrile/butadiene/styrene based copolymers (MABS), butadiene/styrene based copolymers (BS), methacrylate/butadiene based copolymers (MB), methylmethacrylate/acrylate/acrylonitrile based copolymers (MAA), chloropolyethylene based copolymers (CPE); block copolymers based on styrene/butadiene/rubber (SBR) and styrene/ethylene/butene/styrene block copolymers (SEBS), ethylene/propylene/diene monomer (EPDM) and butyl acrylate based polymer modifiers modified with siloxane and/or butadiene monomers in the core. Preferred graft impact modifiers are methyl methacrylate/butadiene/styrene based graft copolymers and acrylic based impact modifiers.

It is contemplated that the at least one mineral oil is mixed with the impact modifier by either (i) combining the mineral oil directly or indirectly with impact modifier after the impact modifier has been formed or (ii) adding mineral oil at the start of, or at some point during, the reaction process used to prepare the impact modifier.

A general description of the preparation of impact modifiers is fully described in the prior art, for example, US 2,802,809, US 3,678,133, US 3,251,904, US 3,793,402 US 2,943,074, US 3,6.71,610, and US 3,899,547, which documents are incorporated herein by reference. A typical process for making an impact modifier involves the steps of:- a) mixing together one or more first monomers an initiator and, optionally, an aqueous surfactant solution; b) heating the resulting mixture to polymerise the monomers; optionally c) combining the resulting polymerised product from step b) with one or more second monomers, a further initiator and further surfactant and heating the resulting mixture to produce an impact modified latex; and d) isolating the resultant impact modifier. This process can be an emulsion, a mini-emulsion or a micro-emulsion polymerisation process, a suspension polymerisation process, a dispersion polymerisation process, a precipitation polymerisation process or an inverse emulsion polymerisation process.

The present invention, therefore, provides a process for combining at least one mineral oil with at least one impact modifier comprising forming the at least one impact modifier using the steps of:- a) mixing together an aqueous surfactant solution, a first monomer material and an initiator; b) heating the resulting mixture to polymerise the monomers; optionally c) combining the resulting polymerised product from step b) with a second monomer, a further initiator and further surfactant and heating the resulting mixture to produce a core/shell latex; and d) isolating the resultant impact modifier; wherein at least one mineral oil to the reaction mixture formed during any one or more of the steps a), b), c) or d).

The above process is also useful to combine impact modifiers with oils which are not mineral oils. These oils include polymers which have a weight average molecular weight (Mw) of 5000 or less comprising polybutene, polydimethylsiloxane, polypropylene, polybutadiene, polyisoprene, preferably the polybutene has a Mw of 300-1500 and the polydimethylsiloxane has a Mw of 900-3100; alkylacrylates having an alkyl group containing 12 or more carbon atoms such as stearyl (meth)acrylate, lauryl (meth)acrylate; esters containing carboxylic acids or alcohols with 12 or more carbon atoms, for example, methyl stearate, ethyl stearate, butyl stearate; stearyl citrate; vegetable oils such as sunflower oil, peanut oil or olive oil; marine oils such as cod liver oil; industrial oils like, castor oil and linseed oil; palm oil such as coconut oil and animal fats such as tallow.

The impact modifier composition of the present invention may also comprise additives such as stabilisers, internal lubricants such as calcium stearate, pigments e.g. TiO₂, and processing aids such as PARALOID K-120N™ (available from Rohm and Haas Company).

The present invention will now be described with reference to the following

### examples.

The mineral oils used in the following experiments were obtained from the Aldrich Chemical Company. Except where otherwise noted, heavy mineral oil was used in these tests. Heavy mineral oil has a density of 0.862g/ml and light mineral oil has a density of 0.838g/ml.

The following general methods are useful to incorporate the mineral oil, the impact modifier and the plastics resin together and are in accordance with the present invention.

### (A) Milling and Compression Moulding.

Impact modifier and mineral oil were mixed together in the desired ratio. After allowing the mineral oil to be absorbed into the impact modifier, the impact modifier-mineral oil mix was blended with the plastics resin by milling for 5 minutes at 177°C using an electric Collin mill. The roller gap was initially set at 12 mils and then increased to 20 mils after fluxing and the roll speed is set at 26revs/min for the front roller and 20 revs/min for the rear roller. After milling, the product was removed from the mill and compression moulded in a 16.6 cm X 24.4 cm X 0.32 cm (6.5" X 9.5" X 0.125") mould at 177°C. The moulding was carried out using a "Reliable Press" under 10 tons pressure under heating for 3 minutes, for 2 minutes under heating at 70 tons pressure and then for 5 minutes with cooling at 70 tons pressure. Bars were cut from these moulded plaques and tested under the notched Izod impact test conditions (ASTM D-256).

### (B) Extrusion and Injection Moulding.

The impact modifier and mineral oil were mixed together in the desired ratio and, after allowing the mineral oil to be absorbed into the impact modifier, the resultant mixture was blended with a plastics resin using a Leistritz twin-screw extruder. The melt temperature was 147-152°C and the melt pressure was 600-710 psig. Notched Izod bars were then injection moulded on a Arburg injection moulding machine using a mould temperature of 90°C, and a feed, centre, metering and nozzle temperature of 145°C, 170°C, 175°C and 180°C respectively.

### (C) Isolation of the Impact Modifier/Mineral Oil Composition

It is possible to isolate the composition of impact modifier and mineral oil obtained as described in (A) and (B) above, prior to blending with the plastics resin, using, for example, coagulation or spray drying methods.

### (a) Coagulation.

Mineral oil was emulsified using an air driven homogenizer using 1% (based on the mineral oil) of sodium lauryl sulphate (SLS) in an oil:water weight ratio of 30:70. The emulsified oil was then mixed with the impact modifier latex before batch coagulation using standard methods and the resulting product was dried in a vacuum oven at 60°C. It was found that the presence of the mineral oil did not affect the coagulation temperature.

### (b) Spray Drying

An aqueous mixture of the mineral oil was first emulsified with sodium lauryl sulphate (SLS) solution before adding to the impact modifier latex with stirring. The mineral oil emulsion-impact modifier blend was then spray dried with a Niro Minor laboratory Spray dryer. The emulsion solids level was approximately 30%. The material was pumped to the dryer atomizer which was running at approximately 40,000 rpm. Heat settings were 150°C inlet and 55°C outlet. The water was flashed off and dry powder was collected.

Examples 1-8 below show how the impact modifier composition of the present invention, produce a melt processed plastics resin with an improved impact strength and a reduced viscosity. Examples 9 and 10 are comparative and do not form part of the present invention. Examples 11 and 12 investigate how the mineral oil is interacting with the plastics resin and impact modifier and Examples 13-15 demonstrate that oils may be incorporated into impact modifiers during the emulsion process for making the impact modifier and that the resulting modified impact modifier product favourably improves impact strength and lowers the viscosity of melt processed resin.

The melt flow rate (MFR) was determined at a temperature of 190°C and a load of 21.6 Kg (Condition F, ASTM D-1238), unless otherwise noted.

The term "PHR" means per hundred parts of resin and in the following examples the resin is polyvinyl chloride (PVC).

Three different PVC containing formulations were tested as detailed below:-

**Typical PVC Capstock Formulation (PVC¹)**

| | **PHR** | **Source** |
|---|---|---|
| PVC, (GEON 27™) | 100 | The Geon Company |
| Stabiliser (TM 281SP™) | 1.2 | Morton International |
| External Lubricant (XL 165™) | 1.0 | Hoechst GmbH |
| Ca Stearate | 1.3 | |
| TiOz | 10 | SCM Chemicals |
| PARALOID K 175™ | 0.5 | Rohm and Haas Company |

**Typical PVC Injection Moulding Formulation (PVC²)**

| | **PHR** | **Source** |
|---|---|---|
| PVC, BFG 110X377 | 100 | B.F. Goodrich Company |
| TM 181, Stabiliser | 2.0 | Morton International |
| Glycerol Monostearate | 2.7 | Lonza Inc. |
| Polyethylene wax (AC629A) | 0.3 | Allied corporation |

**Typical PVC Siding Formulation (PVC ³)**

| | **PHR** | **Source** |
|---|---|---|
| PVC K68 | 100 | |
| Dibasic Lead Phosphite (NAFTOVIN T90™) | 3 | Chemson |
| Neutral Lead Stearate (LISTAB 28™) | 0.3 | Chemson |
| Dibasic Lead Stearate (LISTAB 51™) | 0.7 | Chemson |
| Ca Stearate | 0.3 | Chemson |
| Dicarboxylic acid ester (LOXIOL G61™) | 0.4 | Henkel GmbH |
| Neutral Ester Wax (LOXIOL G32™) | 0.5 | Henkel GmbH |
| High mol. Wt polyethylene Wax (AC307A™) | 0.05 | Allied Chemical |
| PARALOID K175™ | 0.5 | Rohm and Haas Company |
| CaCO3 | 5 | |
| TiO₂ | 4 | |

### Example 1

### The Effect of Mineral Oil On the Impact Strength and Viscosity of PVC¹

Following the mixing and moulding method (A) above, mineral oil was mixed in the amounts shown in Table I below with 5 PHR of an acrylic based impact modifier, PARALOID KM 355™ and compression moulded to produce notched Izod bars.

**Table I**

| **Mineral Oil, PHR** | **0** | **0.25** | **0.375** | **0.5** |
|---|---|---|---|---|
| **N. Izod @15°C, (Ft-Lb/In)** | 24.5 | 25.7 | 26.1 | 25.1 |
| **N. Izod @10°C, (Ft-Lb/In)** | 5.8 | 9.4 | 13.1 | 23.5 |
| **MFR (g/10 Min)** | 4.9 | 5.1 | 5.6 | 6.9 |

The results in Table I show that as the amount of mineral oil in the PVC resin blend increases, impact strength also increases and the viscosity markedly decreases.

### Example 2

### The Effect of Higher Levels of Mineral Oil On the Impact Strength of PVC¹.

Mineral oil was mixed in the amounts shown in Table II below with either PARALOID KM355™ or EXL 2600™ (an MBS based impact modifier available from Rohm and Haas Company and, after allowing the mineral oil to be absorbed into the impact modifier, the resulting composition was added to PVC¹ and notched Izod bars produced as detailed in method (A) above.

**Table II**

| **Mineral Oil** | **0** | **0.5** | **0.75** | **1.5** | **5** | **10** |
|---|---|---|---|---|---|---|
| **PHR** | | | | | | |
| **5PHR PARALOID KM 355™** | 15.9 | 22.8 | 23.7 | 22.0 | 0.4 | 0.2 |
| **N. Izod @15°C** | | | | | | |
| **(Ft-Lb/In)** | | | | | | |
| **5PHR EXL 2600™** | 6.3 | 16.9 | 17.3 | 14.0 | 2.4 | 0.3 |
| **N. Izod @15°c** | | | | | | |
| **(Ft-Lb/In)** | | | | | | |

The results in Table II indicate that when the level of mineral oil is too high, in this case 5PHR or more, the benefits of increased impact strength and reduced viscosity are lost.

### Example 3

### The Effect of Different Grades of Mineral Oil On the Impact Strength Of PVC¹ Resin

Notched Izod bars (1/8") were prepared according to method (A) above, the impact modifier used was PARALOID KM 355™ in an amount of 5 PHR.

**Table III**

| **Mineral Oil** | **0** | **1.0, Heavy Oil** | **1.0, Light Oil** |
|---|---|---|---|
| **PHR** | | | |
| **N. Izod @17°C** | 4.1 | 23.5 | 19.7 |
| **(Ft-Lb/In)** | | | |
| **N. Izod @15°C (Ft-Lb/In)** | 4.3 | 18 | 13.1 |
| **N. Izod @10°C (Ft-Lb/In)** | 3.5 | 7.4 | 4.4 |

As the results in Table III show, both heavy and light oil increase the impact strength of PVC when blended with an impact modifier.

### Example 4

### The Effect of Mineral Oil on the Impact Strength and Viscosity of PVC² when used with a Butadiene Based Impact Modifier.

Following method (B) described above, notched Izod bars (1/4") were produced from a mixture of mineral oil, in the amounts shown in Table IV below, and 13 PHR of butadiene based impact modifier, BTA 751 available from Rohm and Haas Company

**Table IV**

| **Mineral Oil** | **0** | **1.3** |
|---|---|---|
| **PHR** | | |
| **N. Izod @15°C** | 7.9 | 9.1 |
| **(Ft-Lb/In)** | | |
| **N. Izod @10°C** | 3.3 | 9.2 |
| **(Ft-Lb/In)** | | |
| **N. Izod @5°C** | 2.1 | 5.9 |
| **(Ft-Lb/In)** | | |
| **N. Izod @0°C** | 2.0 | 3.3 |
| **(Ft-Lb/In)** | | |
| **MFR, g/10 Min** | 10.8 | 13.1 |
| **(190°C/7.4 Kg)** | | |

Thus, the addition of mineral oil also improves the impact strength of butadiene based impact modifiers and lowers the viscosity of PVC resin.

### Example 5

### The Effect of Mineral Oil on the Impact Strength and Viscosity of PVC² When Used With A PARALOID KM 365™ Impact Modifier.

Following method (B) described above, notched Izod bars were produced from a mixture of mineral oil in the amounts shown in Table V below, and 13 PHR of PARALOID KM 365™ acrylic impact modifier (product of Rohm and Haas Company).

**Table V**

| **Mineral Oil** | **0** | **1.3** |
|---|---|---|
| **PHR** | | |
| **N. Izod @ 23°C** | 12.3^{a} | 12.9^{a} |
| **(Ft-Lb/In)** | | |
| **N. Izod @ 15°C** | 2.6^{a} | 11.3^{a} |
| **(Ft-Lb/In)** | 14.0^{b} | 16.8^{b} |
| **N. Izod @ 10°C** | 2.0^{a} | 2.6^{a} |
| **(Ft-Lb/In)** | 1.4^{b} | 16.0^{b} |
| **N. Izod** @ **5°C** | 2.4^{b} | 12.9^{b} |
| **(Ft-Lb/In)** | | |
| **MFR,** | 10.8^{b} | 11.2^{b} |
| **g/10 Min** | | |
| **190°C @ 7.4Kg** | | |

| | | |
|---|---|---|
| ^{a} 1/4" notched Izod bars | | |
| ^{b} 1/8" notched Izod bars | | |

The results in Table V show that mineral oil mixed with another acrylic impact modifier will also provide increased impact strength and flow rate as compared against samples which comprise only impact modifier and no mineral oil.

### Example 6

### The Effect Of Adding to PVC¹ a Prior Isolated Composition Comprising Mineral Oil and PARALOID KM 355™.

Emulsified mineral oil was added to PARALOID KM 355™ latex impact modifier and the resulting mineral oil-impact modifier blend was then isolated by coagulation according to the method described in (C)(a) above. This isolated product was then blended with PVC¹ using the milling and compression moulding method (A) above, and notched Izod bars were formed and tested (ASTM D-256). Impact strength tests were conducted to compare the effect of i) 0 PHR mineral oil and 5 PHR PARALOID KM 355™, ii) 0.5 PHR mineral oil and 5 PHR PARALOID KM 355™ and iii) 1.25 PHR mineral oil and 5 PHR PARALOID KM 355™ on the impact strength of PVC¹.

**Table VI**

| **Mineral Oil** | **0** | **0.5** | **1.25** |
|---|---|---|---|
| **PHR** | | | |
| **N. Izod @ 15 °C (Ft-Lb/In)** | 20.4 | - | 23.0 |
| **N.Izod @ 12°C (Ft-Lb/In)** | 4.5 | - | 9.7 |
| **N.Izod @ 10°C (Ft-Lb/In)** | 4.3 | - | 12.9 |
| **MFR,** | 4.3 | 6.0 | 8.7 |
| **(g/10 Min, 190°C @ 21.6 Kg)** | | | |

The results in Table VI show that acrylic impact modifiers coagulated in the presence of emulsified mineral oil provide increased impact strength and melt flow as compared with similar samples which contain an acrylic impact modifier without mineral oil.

### Example 7

### The Effect Of Adding To PVC¹ A Prior Isolated Composition Comprising Mineral Oil and EXL 2600™.

Emulsified mineral oil was added to EXL 2600™ latex impact modifier and the resulting mineral oil-impact modifier blend was then isolated by coagulation according to the method described in (C)(a) above. This isolated composition was then blended with PVC¹ using the milling and compression moulding method (A) above, and notched Izod bars were formed and tested (ASTM D-256). Impact strength tests were conducted to compare the effect of i) 0 PHR mineral oil and 5 PHR EXL 2600™, ii) 0.5 PHR mineral oil and 5 PHR EXL 2600™ and iii) 0.75 PHR mineral oil and 5 PHR EXL 2600™ on the impact strength of PVC¹.

**Table VII**

| **Mineral Oil** | **0** | **0.5** | **0.75** |
|---|---|---|---|
| **PHR** | | | |
| **N.Izod @ 15°C** | 13.2 | - | 22.2 |
| **(Ft-Lb/In)** | | | |
| **N.Izod** @ **12°C** | 4.1 | - | 18.0 |
| **(Ft-Lb/In)** | | | |
| **N.Izod @ 10°C** | 4.1 | - | 7.6 |
| **(Ft-Lb/In)** | | | |
| **MFR** | 3.3 | 4.3 | 4.4 |
| **(g/10 Min 190°C @ 21.6Kg)** | | | |

The results in Table VII show that EXL 2600™, an MBS impact modifier, when spray dried with emulsified mineral oil, produces an increase in impact strength and a reduction in melt flow rate as compared with similar samples which only contain EXL 2600™ and no mineral oil.

### Example 8

### The Effect of Mineral Oil and Chloropolyethylene (CPE) on The Impact Strength of PVC¹

Mineral oil, in the amounts detailed in Table VIII below, was mixed with chloropolyethylene (CPE) impact modifier (5PHR in PVC¹), blended with PVC and Izod bars produced using the compression moulding method (B) described above.

**Table VIII**

| **Mineral Oil** | **0** | **0.25** | **0.375** |
|---|---|---|---|
| **N.Izod @ 15°C, (Ft-Lb/In)** | 3.8 | 8.6 | 10.6 |
| **MFR** | 7.3 | 6.5 | 9.1 |
| **(g/10 Min 190°C @ 21.6Kg)** | | | |

The results in Table VIII show that CPE impact modifier has an increased impact strength when combined with mineral oil than when used alone. It is also observed that the viscosity of the melt processed plastics resin reduces when mineral oil is used in an amount equal to or greater than 0.375 PHR.

### Comparative Example 9

### The Effect Of Alpha hydroxyisobutyric acid (HIA) (lubricant) On the Impact Strength of PVC¹

Various amounts of HIA as detailed in the table below were mixed with either PARALOID KM 355™ (5 PHR) or EXL 2600™ (5PHR) blended with PVC and notched Izod bars were then produced using method (B) above.

**Table IX**

| **HIA** | **0** | **0.5** | **1.0** |
|---|---|---|---|
| **PHR** | | | |
| **5PHR PARALOID KM** | 21 | 3.7 | 3.8 |
| **355™** | | | |
| **N Izod @ 18°C,** | | | |
| **(Ft-Lb/In)** | | | |
| **5PHR EXL 2600™** | 11.2 | 3.6 | 3.4 |
| **N Izod @ 18°C,** | | | |
| **(Ft-Lb/In)** | | | |

These results show that HIA causes a detrimental reduction in the impact strength when mixed with either MBS or acrylic impact modifiers.

### Comparative Example 10

### The Effect of Mineral Oil In the Absence of An Impact Modifier.

Izod bars comprising mineral oil and PVC¹ resin were prepared by milling and compression moulding as per method (B) and results are shown in Table X below.

**Table X**

| **Mineral Oil** | **0** | **0.5** | **1.0** | **1.5** |
|---|---|---|---|---|
| **PHR** | | | | |
| **N. Izod @17°C** | - | 2 | 2.4 | 2.4 |
| **Ft-Lb.In** | | | | |
| **N. Izod @15°C** | 1.6 | 2 | 2.2 | 2 |
| **Ft-Lb.In** | | | | |
| **N. Izod @** | 1.3 | 1.6 | 1.9 | 2 |
| **10°C Ft-Lb.In** | | | | |

As the results show, there is little or no improvement in the impact strength of PVC when mineral oil is blended on its own without an impact modifier.

### Example 11

### The Effect of Mineral Oil and Impact Modifier on the Fusion Time of PVC.

The fusion time of the melt processed plastics resin was determined using a Haake Rheocord 90 instrument, in particular, the torque versus time profile was obtained.

A plastics resin master batch was prepared (PVC⁴), by combining 100 parts of PVC plastics resin (Geon EP-103, F76, K67, available from The Geon Company), 1.2 parts of a commercial stabiliser sold by Morton International under the trade name TM 181™, 1.3 parts of calcium stearate and 1.0 part of an external lubricant sold by Hoescht GmbH under the trade name Hostalube 165™, and then adding mineral oil and/or impact modifier to 60g of this master batch in the amounts shown in Table XI below. The resulting master batch was then introduced into the Haake bowl. The run temperature was 185°C and the rotor speed was 60 rpm. The mineral oil was either added directly to the PVC master batch or premixed with the impact modifier and then added to the PVC. The fusion time (seconds) is the time taken to reach the peak of the torque versus time profile following the initial Haake premixing.

**Table XI**

| Composition | Mineral Oil | Fusion Time |
|---|---|---|
| | (PHR) | (Sec) |
| PVC⁴ (control- no mineral oil or impact modifier) | 0 | 262 |
| PVC⁴ | 0.25 | 373 |
| PVC⁴ | 0.5 | 544 |
| PVC⁴ | 0.75 | 538 |
| PVC⁴ | 1 | 504 |
| PVC⁴ +5 PHR PARALOID KM 355™ | 0 | 112 |
| PVC⁴ +5 PHR PARALOID KM 355™ * | 0.25 | 119 |
| PVC⁴ +5 PHR PARALOID KM 355™ * | 0.5 | 119 |
| PVC⁴ +5 PHR PARALOID KM 355™ * | 0.75 | 114 |
| PVC⁴ +5 PHR PARALOID KM 355™ * | 1.0 | 119 |

| | | |
|---|---|---|
| *Impact modifier and mineral oil blended together first before adding to PVC master batch. | | |

The above results show that i) when impact modifier is absent, increasing amounts of mineral oil causes the time it takes for PVC to fuse to also increase; and ii) when impact modifier and mineral oil are both present, the fusion time is much less affected by increasing amounts of mineral oil. This experiment demonstrates the mineral oil is not acting as an external lubricant when the impact modifier is also present.

### Example 12

### Demonstration That The Mineral Oil Has Little Or No Effect On The Softening Point Of PVC

Vicat tests were performed in accordance with ASTM D-1525 (heating rate of 120°C/Hr) PVC¹ composition was used throughout.

**Table XII**

| Composition | Vicat Temp (°C) |
|---|---|
| | (2 Repeats) |
| PVC¹ with 5 PHR of PARALOID KM 355™ | 89.2, 89.1 |
| PVC¹ with 5 PHR of PARALOID KM 355™ + 0.5 PHR mineral oil | 88.6, 89.0 |
| PVC¹ with 5 PHR of PARALOID KM 355™ + 0.75 PHR mineral oil | 88.7, 89.0 |
| PVC¹ with 5 PHR of PARALOID KM 355™ + 1.0 PHR mineral oil | 88.7, 89.1 |

### Example 13

### Incorporating Mineral Oil Into An Impact Modifier During The Emulsion Preparation Of The Emulsion Impact Modifier

Heavy mineral oil (158.2g) from Aldrich was dissolved in butyl acrylate monomer (1369g), and the resulting solution was mixed with water (552.2g) and, sodium lauryl sulphate (a surfactant), (1.27g) to form an emulsion. This mixture was then homogenized to form small droplets, fed into a reactor vessel together with an initiator. The resulting mixture was then heated to effect polymerisation. The polymerised product (first stage polymer) was then reacted with methyl methacrylate monomer in an aqueous surfactant solution and an initiator to form a core/shell polymer and this was subjected to batch coagulation with salt. The modified impact modifier product (Sample A) isolated as a fine powder by filtration.

The modified impact modifier (Sample A) was then mixed with PVC³ plastics resin and V-Notched Charpy tests were conducted in accordance with ASTM D-256 (Method B). The test pieces were made by the milling and moulding method (A) above. The impact strength of samples of PVC³ modified with PARALOID KM 355™ were compared with the impact strength of PVC³ containing an equivalent amount of modified impact modifier, Sample A.

**Table XIII**

| **Test Composition** | **V-Notched Charpy Impact** |
|---|---|
| | **Strength KJ/M**^{**2**} @ **23°C** |
| PVC³ + 7 PHR PARALOID KM 355™ | 34.5 |
| PVC³ + 7 PHR Sample A | 54.2 |

| **Test Composition** | **MFR g/10Min 190°C @ 21.6Kg** |
|---|---|
| PVC' + 5 PHR PARALOID KM 355™ | 2.0 |
| PVC' + 5.5** PHR of Sample A | 5.3 |

| | |
|---|---|
| ** This is equivalent to 5 PHR PARALOID KM 355™ and 0.5 PHR of mineral oil. | |

### Example 14

### Incorporating Polydimethylsiloxane Into An Impact Modifier During The Emulsion Preparation Of The Impact Modifier

The polydimethylsiloxane used in this experiment had a molecular weight of 900g/mole and a viscosity of 10 centistokes.

Polydimethylsiloxane (158.2g) was dissolved in butyl acrylate monomer (1369g), and the resulting solution was emulsified with water (552.2g) and a surfactant, sodium lauryl sulphate, (1.27g). This emulsion was then homogenized to form small droplets, fed into a reactor vessel together with an initiator. The resulting mixture was then heated to effect polymerisation. The polymerised product (first stage polymer) was then reacted with methyl methacrylate monomer and an initiator to form a core/shell polymer and this was subjected to batch coagulation with salt. The modified impact modifier product (Sample B) isolated as a fine powder by filtration.

The modified impact modifier (Sample B) was then mixed with PVC³ plastics resin and notched Izod tests were conducted in accordance with ASTM D-256, (Method B). The test pieces were made by the milling and moulding method A above, except that milling was carried out at 175°C and the material was moulded at 190°C . The impact strength of samples of PVC³ modified with PARALOID KM 355™ were compared with the impact strength of PVC³ containing an equivalent amount of modified impact modifier, Sample B.

**Table XIV**

| | **Notched Izod Impact** | | |
|---|---|---|---|
| | **Strength (Ft Lb/In)** | | |
| **Test Composition** | **@ 9°C** | **@ 11°C** | **@ 13°C** |
| PVC3 + 7 PHR PARALOID KM 355™ | 10.4 | 12.4 | 17.5 |
| PVC³ + 7 PHR Sample B | 15.2 | 25.9 | 24.3 |

### Example 15

### Incorporating Polybutene Into An Impact Modifier During The Emulsion Preparation Of The Impact Modifier

Polybutene (L-14, Amoco) (30.2g) was mixed with butyl acrylate monomer (120.9g), water (63.08g), allyl methacrylate (0.68g), Siponate DS-4 (159g) and a surfactant, sodium lauryl sulphate, (1.27g) and emulsified. This emulsion was then homogenised in a high speed mixer and the resulting mixture was fed into a reactor vessel. To this was added an initiator and the mixture was heated to effect polymerisation. This polymerised product (first stage polymer) was reacted with methyl methacrylate monomer in an aqueous surfactant solution and an initiator to form a core/shell polymer which was subjected to freeze coagulation to isolate the modified impact modifier product (Sample C).

The modified impact modifier (Sample C) was then mixed with PVC¹ plastics resin and notched Izod tests were conducted in accordance with ASTM D-256 (Method B). The test pieces were made by the milling and moulding method A above. The impact strength of samples of PVC¹ modified with PARALOID KM 355™ were compared with the impact strength of PVC¹ containing an equivalent amount of modified impact modifier, Sample C.

**Table XV**

| | **Notched Izod Impact** | | |
|---|---|---|---|
| | **Strength (Ft-Lb/In)** | | |
| **Test Composition** | **@ 15°C** | **@ 10°C** | **@ 7°C** |
| PVC¹ + 5 PHR PARALOID KM 355™ | 25 | 5 | 4.2 |
| PVC¹ + 5 PHR Sample C | 28.8 | 23.8 | 11.9 |

## Claims

1. Method of producing an impact modifier composition, said method comprising mixing together ingredients consisting of:-
a) at least one impact modifier;
b) at least one mineral oil;
c) 0-50% by weight of the one or more plastics resins; and, optionally, .
d) additives selected from stabilizers, internal lubricants, pigments and processing aids;
wherein the ratio of mineral oil to impact modifier is in the range from 0.1:10 to 4:10.

2. Method according to claim 1, wherein the at least one impact modifier is used either in latex, emulsion or dry powder form.

3. Method of preparing an impact modified plastics resin comprising combining one or more plastics resins with an impact modifier composition prepared according to claim 1.

4. Method according to claim 3, wherein the one or more plastics resins are selected from one or more of:- polyvinyl halide; polyalkylene terephthalate polymers; polycarbonate polymers; polyalkylene terephthalate/polycarbonate polymer blends; acrylonitrile/butadiene/styrene polymers; polyolefin polymers; mixed polyolefin polymer blends; and polyketone polymers.

5. Method of producing an impact modifier composition, said method comprising mixing together:-
a) at least one impact modifier in latex form;
b) at least one mineral oil; and
c) 0-50% by weight of the one or more plastics resins;
wherein the ratio of mineral oil to impact modifier is in the range from 0.1:10 to 4:10.

## Revendications

1. Méthode de production d'une composition d'agent modifiant la résistance au choc, ladite méthode comprenant le mélange d'ingrédients constitués par :
a) au moins un agent modifiant la résistance au choc ;
b) au moins une huile minérale ;
c) de 0 à 50 % en masse d'une ou plusieurs résines de matière plastique ; et, optionnellement,
d) des additifs choisis parmi les stabilisants, les lubrifiants internes, les pigments et les adjuvants de fabrication ;
où le rapport de l'huile minérale à l'agent modifiant la résistance au choc est dans l'intervalle de 0,1:10 à 4:10.

2. Méthode selon la revendication 1, dans laquelle le au moins un agent modifiant la résistance au choc est utilisé sous la forme d'un latex, d'une émulsion ou d'une poudre sèche.

3. Méthode pour la préparation d'une résine de matière plastique dont la résistance au choc est modifiée, comprenant la combinaison d'une ou plusieurs résines de matière plastique avec une composition d'agent modifiant la résistance au choc préparée selon la revendication 1.

4. Méthode selon la revendication 3, dans laquelle la ou les résines de matière plastique sont choisies parmi une ou plusieurs des suivantes : un halogénure de polyvinyle ; les polymères poly(téréphtalate d'alkylène) ; les polymères polycarbonate ; les mélanges de polymères poly(téréphtalate d'alkylène)/polycarbonate ; les polymères acrylonitrile/butadiène/styrène ; les polymères polyoléfiniques ; les mélanges de polymères polyoléfiniques mixtes et les polymères polycétoniques.

5. Méthode de production d'une composition pour agent modifiant la résistance au choc, ladite méthode comprenant le mélange de :
a) au moins un agent modifiant la résistance au choc sous la forme d'un latex ;
b) au moins une huile minérale ; et
c) de 0 à 50 % en masse d'une ou plusieurs résines de matière plastique ;
où le rapport de l'huile minérale à l'agent modifiant la résistance au choc est dans l'intervalle de 0,1:10 à 4:10.

## Patentansprüche

1. Verfahren zum Herstellen einer schlagzähmachenden Hilfsstoffzusammensetzung, wobei das Verfahren das Zusammenmischen von Bestandteilen, bestehend aus
a) mindestens einem schlagzähmachenden Hilfsstoff,
b) mindestens einem Mineralöl,
c) 0 bis 50 Gew.-% des einen oder mehrerer Kunststoffharze und gegebenenfalls
d) Additiven, ausgewählt aus Stabilisierungsmitteln, inneren Gleitmitteln, Pigmenten und Verarbeitungshilfsstoffen,
umfasst,
wobei das Verhältnis von Mineralöl zu schlagzähmachendem Hilfsstoff in dem Bereich von 0,1:10 bis 4:10 liegt.

2. Verfahren nach Anspruch 1, wobei der mindestens eine schlagzähmachende Hilfsstoff entweder in Latex-, Emulsions- oder Trockenpulverform verwendet wird.

3. Verfahren zum Herstellen eines schlagzähgemachten Kunststoffharzes, umfassend das Vereinigen eines oder mehrerer Kunststoffharze mit einer nach Anspruch 1 hergestellten schlagzähmachenden Hilfsstoffzusammensetzung.

4. Verfahren nach Anspruch 3, wobei das eine oder die mehreren Kunststoffharze aus einem oder mehreren von Polyvinylhalogenid, Polyalkylenterephthalatpolymeren, Polycarbonatpolymeren, Polyalkylenterephthalat/Polycarbonat-Polymerblends, Acrylnitril/Butadien/Styrolpolymeren, Polyolefinpolymeren, gemische Polyolefinpolymerblends und Polyketonpolymeren ausgewählt sind.

5. Verfahren zum Herstellen einer schlagzähmachenden Hilfsstoffzusammensetzung, wobei das Verfahren das Zusammenmischen von
a) mindestens einem schlagzähmachenden Hilfsstoff in Latexform,
b) mindestens einem Mineralöl und
c) 0 bis 50 Gew.-% eines oder mehrerer Kunststoffharze
umfasst,
wobei das Verhältnis von Mineralöl zu schlagzähmachendem Hilfsstoff in dem Bereich von 0,1:10 bis 4:10 liegt.
